# EUROPEAN PATENT APPLICATION

(11) **EP 3 793 251 A1**
(43) Date of publication of application: **17.03.2021**
(21) Application number: 19800801.3
(22) Date of filing: 10.05.2019
(51) Int. Cl.: H04W 28/18, H04L 27/26

(54) **TERMINAL DEVICE AND BASE STATION DEVICE**

(30) Priority: 10.05.2018 JP 2018091540
(71) Applicant: Sharp Kabushiki Kaisha, Sakai-shi Osaka 590-8522 (JP); FG Innovation Company Limited, Hong Kong (CN)
(72) Inventor: NAKAMURA, Osamu, Sakai City, Osaka 590-8522 (JP); GOTOH, Jungo, Sakai City, Osaka 590-8522 (JP); SATO, Seiji, Sakai City, Osaka 590-8522 (JP); HAMAGUCHI, Yasuhiro, Sakai City, Osaka 590-8522 (JP)
(74) Representative: Müller Hoffmann & Partner
(86) International application number: PCT/JP2019/018728
(87) International publication number: WO 2019/216410

(57) **Abstract**

The present invention provides a terminal apparatus for communicating with a base station apparatus, the terminal apparatus including: a controller configured to use an MCS table among a first MCS table, a second MCS table, and a third MCS table, and an MCS index, to determine a modulation order and a target coding rate to be used in a PDSCH, wherein the third MCS table is used in a case that at least a higher parameter for an MCS table is configured to a prescribed value, and a PDSCH is scheduled by a PDCCH with a CRC scrambled by a first RNTI, or a PDSCH is scheduled by a PDCCH with a CRC scrambled by a second RNTI is added.

## Description

### Technical Field

The present invention relates to a terminal apparatus and a base station apparatus. This application claims priority based on JP 2018-91540 filed on May 10, 2018, the contents of which are incorporated herein by reference.

### Background Art

In Long Term Evolution (LTE) communication system standardized by Third Generation Partnership Project (3GPP), in a downlink, adaptive modulation (Link adaptation, Rank adaptation) is applied that adaptively controls the coding rate, modulation scheme, rank (number of streams, number of layers) according to the channel state. The adaptive modulation allows transmission at an appropriate transmission rate depending on the channel quality.

In order to perform the adaptive modulation in the downlink, according to the standard of LTE, the base station apparatus and the terminal apparatus share an MCS table consisting of 32 indexes, the base station apparatus notifies the MCS index used for data transmission, and the terminal apparatus performs data demodulation by using the notified MCS index. Furthermore, according to the standard of LTE Rel-12 and later versions, an MCS table including QPSK, 16QAM, and 64QAM, and an MCS table including QPSK, 16QAM, 64QAM, and 256QAM are semi-statically switched for use through higher layer signaling according to the channel state.

Currently in 3GPP, standardization of the fifth generation mobile communication (New Radio, NR) has been conducted with use cases of enhanced Mobile Broad Band (eMBB), Ultra-Reliable and Low Latency Communications (URLLC) and massive Machine-Type Communications (mMTC). In NR, as well as LTE, it is agreed that an MCS table including QPSK, 16QAM, and 64QAM, and an MCS table including QPSK, 16QAM, 64QAM, 256QAM are defined, and further an MCS table for the URLLC is also defined (NPL 1). In order to dynamically select an MCS table for the URLLC, it has been proposed to select the MCS table depending on whether the data allocation is notified to the terminal apparatus by a DCI format for the URLLC (NPL 2).

### Citation List

### Non Patent Literature

NPL 1: Nokia, Nokia Shanghai Bell, "Remaining details of CQI and MCS", R1-1800753.
NPL 2: OPPO, "CQI and MCS design for URLLC", R1-1804009.

### Summary of Invention

### Technical Problem

No detailed discussion has been made regarding how to configure an MCS table for the URLLC. In a case that a DCI format for the URLLC is not standardized, a method for dynamically selecting an MCS table is not disclosed.

One aspect of the present invention has been made in view of such circumstances, and an object of the present invention is to provide a method for efficiently configuring an MCS table for the URLLC even in a case that a new DCI format is not standardized.

### Solution to Problem

To address the above-mentioned drawbacks, a base station apparatus, a terminal apparatus, and a communication method according to an aspect of the present invention are configured as follows.
(1) One aspect of the present invention is a terminal apparatus for communicating with a base station apparatus, the terminal apparatus including: a controller configured to use an MCS table among a first MCS table, a second MCS table, and a third MCS table, and an MCS index, to determine a modulation order and a target coding rate to be used in a PDSCH, wherein the third MCS table is used in a case that at least a higher parameter for an MCS table is configured to a prescribed value, and a PDSCH is scheduled by a PDCCH with a CRC scrambled by a first RNTI, or a PDSCH is scheduled by a PDCCH with a CRC scrambled by a second RNTI.
(2) In one aspect of the present invention, the third MCS table is used in a case that a PDCCH with a CRC scrambled by the C-RNTI is DCI format 1_1.
(3) One aspect of the present invention is a terminal apparatus for communicating with a base station apparatus, the terminal apparatus including: a controller configured to use an MCS table among a first MCS table, a second MCS table, and a third MCS table, and an MCS index, to determine a modulation order and a target coding rate to be used in a PUSCH, wherein the third MCS table is used in a case that at least a higher parameter for an MCS table is configured to a prescribed value, and a PUSCH is scheduled by a PDCCH with a CRC scrambled by a first RNTI is added, or a PUSCH is scheduled by a PDCCH with a CRC scrambled by a second RNTI is added.
(4) One aspect of the present invention is a base station apparatus for communicating with a terminal apparatus, the base station apparatus including: a controller configured to use an MCS table among a first MCS table, a second MCS table, and a third MCS table, and an MCS index, to determine a modulation order and a target coding rate to be used in a PDSCH, wherein the controller uses the third MCS table in a case that at least a higher parameter for an MCS table is configured to a prescribed value, and a PDSCH is scheduled by a PDCCH with a CRC scrambled by a first RNTI is added, or a PDSCH is scheduled by a PDCCH with a CRC scrambled by a second RNTI is added.
(5) In one aspect of the present invention, the third MCS table is used in a case that a higher parameter for an MCS table is configured to a prescribed value and is scheduled by DCI format 1_1.
(6) One aspect of the present invention is a base station apparatus for communicating with a terminal apparatus, the base station apparatus including: a controller configured to use an MCS table among a first MCS table, a second MCS table, and a third MCS table, and an MCS index, to determine a modulation order and a target coding rate to be used in a PUSCH, wherein the controller uses the third MCS table in a case that at least a higher parameter for an MCS table is configured to a prescribed value, and a PUSCH is scheduled by a PDCCH with a CRC scrambled by a first RNTI is added, or a PUSCH is scheduled by a PDCCH with a CRC scrambled by a second RNTI is added.

### Advantageous Effects of Invention

According to one or more aspects of the present invention, the base station apparatus and the terminal apparatus can appropriately select the MCS table for the URLLC.

### Brief Description of Drawings

FIG. 1 is a diagram illustrating an example of a configuration of a communication system 1 according to a first embodiment.
FIG. 2 is a diagram illustrating an example of a configuration of a base station apparatus according to the first embodiment.
FIG. 3 is a diagram illustrating an example of a configuration of a terminal apparatus according to the first embodiment.
FIG. 4 is a diagram illustrating a first CQI table according to the first embodiment.
FIG. 5 is a diagram illustrating a second CQI table according to the first embodiment.
FIG. 6 is a diagram illustrating a third CQI table according to the first embodiment.
FIG. 7 is a diagram illustrating a first MCS table according to the first embodiment.
FIG. 8 is a diagram illustrating a second MCS table according to the first embodiment.
FIG. 9 is a diagram illustrating a third MCS table according to the first embodiment.
FIG. 10 is a diagram illustrating an example of an MCS table configuration for each BWP according to a third embodiment.

### Description of Embodiments

A communication system according to the present embodiments includes a base station apparatus (a cell, a small cell, a serving cell, a component carrier, an eNodeB, a Home eNodeB, and a gNodeB) and a terminal apparatus (a terminal, a mobile terminal, and User Equipment (UE)). In the communication system, in a case of a downlink, the base station apparatus serves as a transmitting apparatus (a transmission point, a transmit antenna group, a transmit antenna port group, or a Tx/Rx Point (TRP)), and the terminal apparatus serves as a receiving apparatus (a reception point, a reception terminal, a receive antenna group, or a receive antenna port group). In a case of an uplink, the base station apparatus serves as a receiving apparatus, and the terminal apparatus serves as a transmitting apparatus. The communication system is also applicable to Device-to-Device (D2D, sidelink) communication. In this case, the terminal apparatus serves both as a transmitting apparatus and as a receiving apparatus.

The communication system is not limited to data communication involving a human between a terminal apparatus and a base station apparatus. In other words, the communication system is also applicable to a form of data communication requiring no human intervention, such as Machine Type Communication (MTC), Machine-to-Machine (M2M) Communication, communication for Internet of Things (IoT), or Narrow Band-IoT (NB-IoT) (hereinafter referred to as MTC). In this case, the terminal apparatus serves as an MTC terminal. The communication system can use, in the uplink and the downlink, a multi-carrier transmission scheme, such as a Cyclic Prefix-Orthogonal Frequency Division Multiplexing (CP-OFDM). The communication system may use, in the uplink, a transmission scheme, such as a Discrete Fourier Transform Spread-Orthogonal Frequency Division Multiplexing (DFTS-OFDM, also referred to as an SC-FDMA). Although the following describes a case of using an OFDM transmission scheme in the uplink and the downlink, the transmission scheme is not limited to this and another transmission scheme is applicable.

The base station apparatus and the terminal apparatus according to the present embodiments can communicate in a frequency band for which an approval of use (license) has been obtained from the government of a country or region where a radio operator provides services, that is, a so-called licensed band, and/or in a frequency band for which no approval (license) from the government of the country or region is required, that is, a so-called unlicensed band.

According to the present embodiments, "X/Y" includes the meaning of "X or Y". According to the present embodiments, "X/Y" includes the meaning of "X and Y". According to the present embodiments, "X/Y" includes the meaning of "X and/or Y".

### First Embodiment

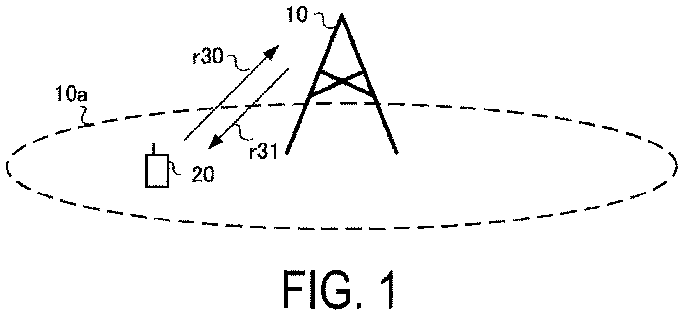

FIG. 1 is a diagram illustrating an example of a configuration of a communication system 1 according to the present embodiment. The communication system 1 according to the present embodiment includes a base station apparatus 10 and a terminal apparatus 20. Coverage 10a is a range (a communication area) in which the base station apparatus 10 can connect to (communicate with) the terminal apparatus 20 (coverage 10a is also referred to as a cell). Note that the base station apparatus 10 can accommodate multiple terminal apparatuses 20 in the coverage 10a.

In FIG. 1, an uplink radio communication r30 at least includes the following uplink physical channels. The uplink physical channels are used for transmitting information output from a higher layer.
- Physical Uplink Control Channel (PUCCH)
- Physical Uplink Shared Channel (PUSCH)
- Physical Random Access Channel (PRACH)

The PUCCH is a physical channel that is used to transmit Uplink Control Information (UCI). The uplink control information includes a positive acknowledgement (ACK)/negative acknowledgement (NACK) for downlink data. Here, the downlink data indicates a Downlink transport block, a Medium Access Control Protocol Data Unit (MAC PDU), a Downlink-Shared Channel (DL-SCH), a Physical Downlink Shared Channel (PDSCH), and the like. The ACK/NACK is also referred to as a Hybrid Automatic Repeat request ACKnowledgement (HARQ-ACK), a HARQ feedback, a HARQ response, or a signal indicating HARQ control information or a delivery confirmation.

NR supports at least five formats: PUCCH format 0, PUCCH format 1, PUCCH format 2, PUCCH format 3, and PUCCH format 4. PUCCH format 0 and PUCCH format 2 includes one or two OFDM symbols, and the other PUCCH includes 4 to 14 OFDM symbols. PUCCH format 0 and PUCCH format 1 includes a bandwidth of 12 subcarriers. In PUCCH format 0, 1-bit (or 2-bit) ACK/NACK is transmitted in resource elements including 12 subcarriers and one OFDM symbol (or two OFDM symbols).

The uplink control information includes a Scheduling Request (SR) used to request a PUSCH (Uplink-Shared Channel (UL-SCH)) resource for initial transmission. The scheduling request indicates that the UL-SCH resource for initial transmission is requested.

The uplink control information includes downlink Channel State Information (CSI). The downlink channel state information includes a Rank Indicator (RI) indicating a preferable spatial multiplexing order (the number of layers), a Precoding Matrix Indicator (PMI) indicating a preferable precoder, a Channel Quality Indicator (CQI) designating a preferable transmission rate, and the like. The PMI indicates a codebook determined by the terminal apparatus. The codebook is related to precoding of the physical downlink shared channel.

In NR, a higher layer parameter RI restriction can be configured. There are multiple configuration parameters for the RI restriction, one of which is a type 1 single panel RI restriction and consists of 8 bits. The bitmap parameter, type 1 single panel RI restriction, forms bit sequence r7, ..., r2, r1. Here, r7 is a Most Significant Bit (MSB), and r0 is a Least Significant Bit (LSB). In a case that ri is zero (i is 0, 1, ... 7), PMI and RI reporting corresponding to precoder associated with a i + 1 layer are not permitted. In addition to the type 1 single panel RI restriction, types of Rl restriction includes type 1 multi-panel RI restriction consisting of four bits. The bitmap parameter, type 1 multi-panel RI restriction, forms bit sequence r4, r3, r2, r1. Here, r4 is the MSB, and r0 is the LSB. In a case that ri is zero (i is 0, 1, 2, 3), PMI and RI reporting corresponding to precoder associated with a i + 1 layer are not permitted.

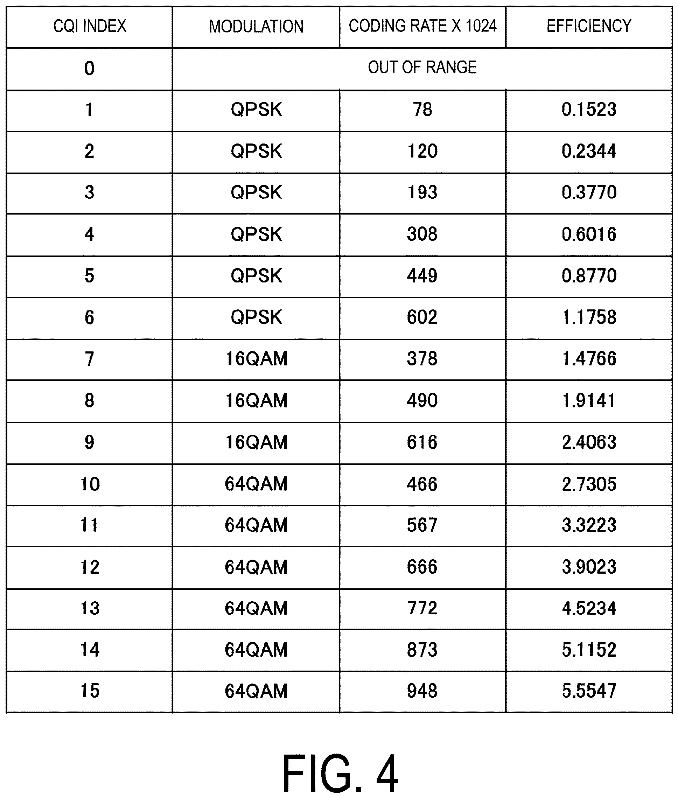

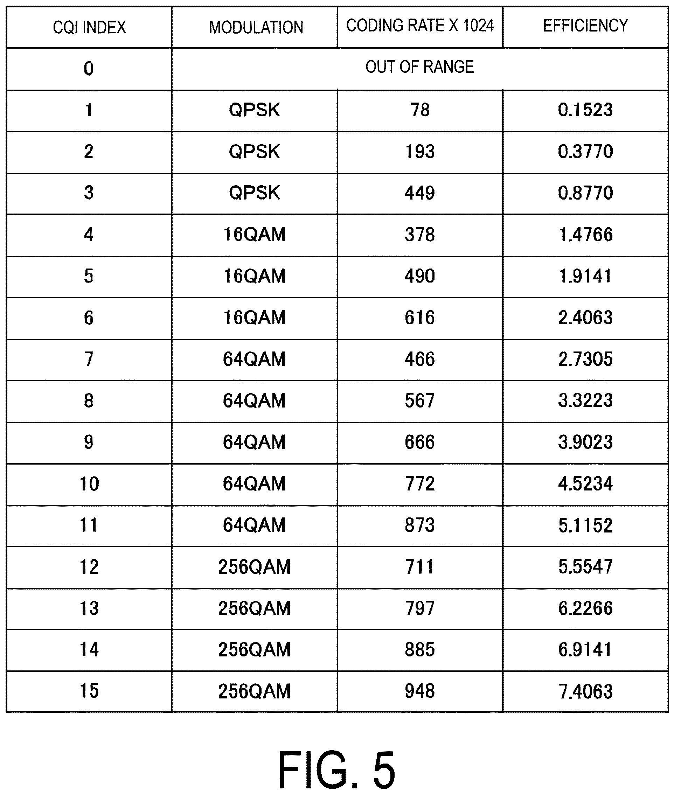

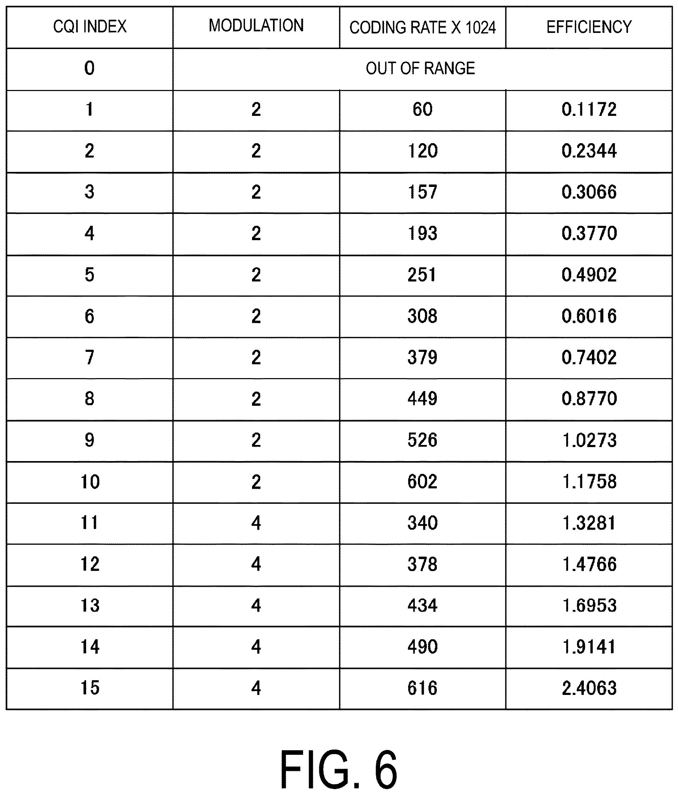

The CQI can use an index (CQI index) indicative of a preferable modulation scheme (for example, QPSK, 16QAM, 64QAM, 256QAMAM, or the like), a preferable coding rate, and a preferable frequency utilization efficiency in a prescribed band. The terminal apparatus selects, from the CQI table, a CQI index considered to allow a transport block on the PDSCH to be received within a prescribed block error probability (BLER, for example, an error rate of 0.1). However, the BLER can be configured using higher layer parameters, and a value such as 0.00001 and 0.1 can be configured. The BLER may be a BLER associated with a CQI table configured through higher layer signaling, rather than being directly configured using higher layer parameters. For example, three CQI tables are assumed including a CQI table (a first CQI table, 64QAM CQI table) including QPSK, 16QAM, 64QAM as illustrated in FIG. 4, a CQI table (a second CQI table, 64QAM CQI table) including QPSK, 16QAM, 64QAM, 256QAM as illustrated in FIG. 5, and a CQI table (a third CQI table, URLLC CQI table, CQI table for URLLC) including QPSK, 16QAM, 64QAM and including lower frequency utilization efficiency than 64QAM CQI table as illustrated in FIG. 6. The use of any of the three CQI tables is configured through RRC signaling, which is higher layer signaling, and in a case that the 64QAM CQI table or the 256QAM CQI table is configured, the target BLER is configured to 0.1, and in a case that the URLLC CQI table is configured, the target BLER is configured to 0.00001. In a case that the BLER can be configured using a higher layer parameter, in a case that the 64QAM CQI table or the 256QAM CQI table is configured, the BLER is set to 0.1 regardless of the configuration of the RRC parameter "cqi-Table", and in a case that the URLLC CQI table is configured, the BLER may be configured to 0.1 or 0.00001 depending on the RRC parameter.

A case that three of the 64QAM CQI table, the 256QAM CQI table, and the URLLC CQI table can be configured using the RRC parameter "cqi-Table", and the target BLER can be configured using the RRC parameter will be described. In a case that the RRC parameter "BLER-target" itself is not configured (or in a case that a non-specified value such as spare is configured), the CSI reporting is performed by using a CQI table configured using the RRC parameter "cqi-Table". Note that in a case that the RRC parameter "BLER-target" itself is not configured and that the URLLC CQI table is configured using the RRC parameter "cqi-Table", the CSI reporting may be performed by using the 64QAM CQI table. In a case that the RRC parameter "BLER-target" indicates the BLER = 0.1, the CSI reporting is performed by using a CQI table configured using the RRC parameter "cqi-Table". Note that in a case that the URLLC CQI table is configured using the RRC parameter "cqi-Table" and the RRC parameter "BLER-target" indicates the BLER = 0.1, the 64QAM CQI table may be used instead of the URLLC CQI table. In a case that the RRC parameter "BLER-target" indicates the BLER = 0.00001, the CSI reporting is performed by using a CQI table configured using the RRC parameter "cqi-Table". Note that in a case that the RRC parameter "BLER-target" indicates the BLER = 0.00001, the URLLC CQI table may be used regardless of the configuration of the RRC parameter "cqi-Table".

A case that only two of the 64QAM CQI table and the 256QAM CQI table can be configured using the RRC parameter "cqi-Table", and the target BLER can be configured using the RRC parameter will be described. In a case that the RRC parameter "BLER-target" itself is not configured (or in a case that a non-specified value such as spare is configured), the CSI reporting is performed by using a CQI table configured using the RRC parameter "cqi-Table". In a case that the RRC parameter "BLER-target" indicates the BLER = 0.1, the CSI reporting is performed by using the 64QAM CQI table, regardless of the configuration of the RRC parameter "cqi-Table". Note that in a case that the RRC parameter "BLER-target" indicates the BLER = 0.1, the CQI table may be configured depending on the configuration of "cqi-Table". In a case that the RRC parameter "BLER-target" indicates the BLER = 0.00001, the CSI reporting is performed by using the URLLC CQI table, regardless of the configuration of the RRC parameter "cqi-Table".

Note that the CQI table to be used may be configured for each CSI process. Different CQI tables or target BLERs may be configured for each of periodic CSI reporting, aperiodic CSI reporting, and semi-static CSI reporting.

In NR, an RRC parameter (nrofCQIsPerReport or Number_CQI) for defining a maximum number of CQIs per CSI reporting is standardized. In a case that a higher layer configuration parameter Number-CQI set to '1' is configured for the terminal apparatus, a single CQI is reported for each codeword in each CSI report. In a case that '2' is configured, one CQI is reported for each codeword in each CSI report. The Number-CQI is included in an RRC parameter ReportConfig.

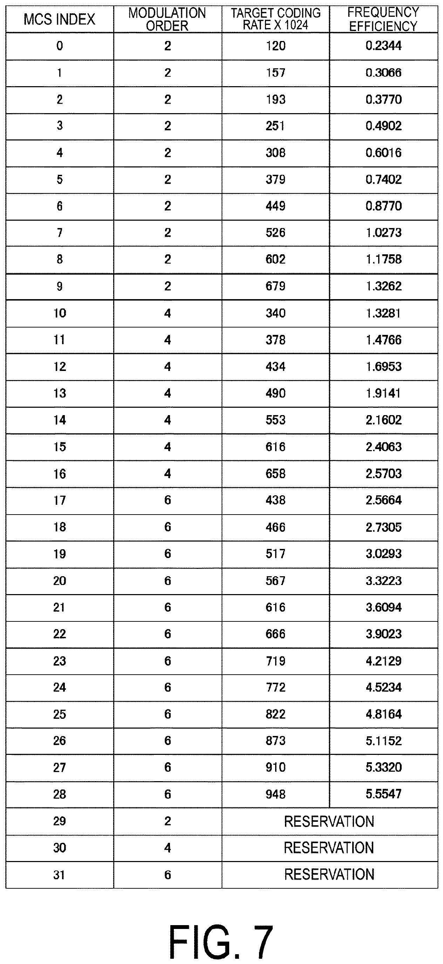

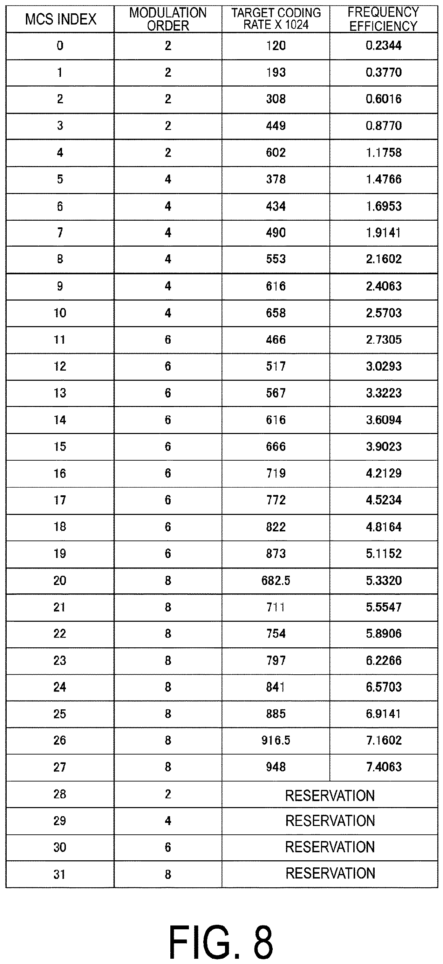

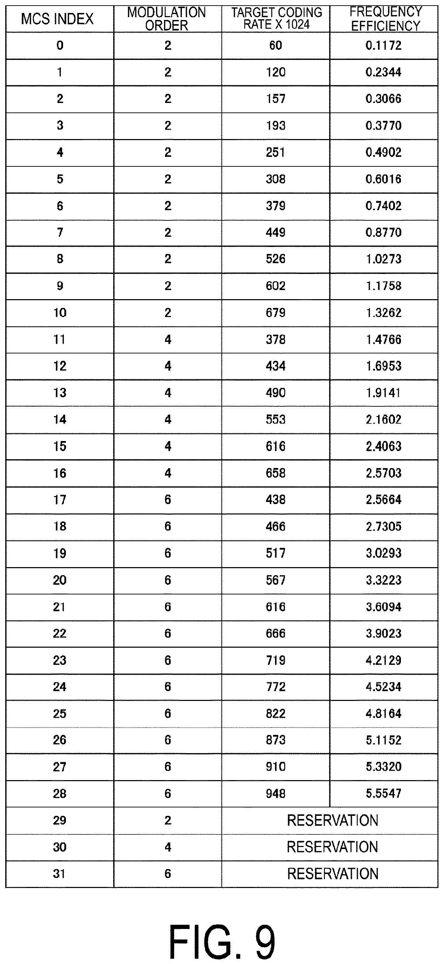

Next, the base station apparatus will be described. In a case that the transport block error rate is configured by a higher layer processing unit 102, a downlink control signal generation unit configures the MCS index in consideration of the conditions assumed in the CSI calculation performed by the terminal apparatus, and notifies (transmits) it to the terminal apparatus as the DCI. The MCS index is configured by using an MCS table (MCS index table), but multiple MCS tables are present in NR, and the MCS index is configured using an RRC parameter "mcs-Table" which is transmitted via the radio transmitting unit 1070. One MCS table is an MCS table (a first MCS table, 64QAM MCS table) including QPSK, 16QAM, and 64QAM as illustrated in FIG. 7, and the other is an MCS table (a second MCS table, 256QAM MCS table) including QPSK, 16QAM, 64QAM, and 256QAM as in FIG. 8. Note that the modulation order column represents the order of the modulation scheme, 2 denotes QPSK, 4 denotes 16QAM, 6 denotes 64QAM, and 8 denotes 256QAM. The MCS table further includes a column of target coding rates and a column of frequency efficiency. The target coding rate represents an indication of the coding rate during data transmission, and the frequency efficiency column represents frequency utilization efficiency (alternatively referred to as spectral efficiency). Furthermore, an MCS table (a third MCS table, URLLC MCS table, MCS table for URLLC) including QPSK, 16QAM, and 64QAM may be supported as an MCS table for URLLC. FIG. 9 illustrates an example of the third MCS table. Here, the difference between the first MCS table and the third MCS table is that the lowest frequency efficiency value of the third MCS table is lower than the first and second MCS tables. Furthermore, the maximum frequency efficiency value is lower than the first and second MCS tables. In other words, in order to determine the modulation order and target coding rate used in the PDSCH, the controller uses the MCS table and MCS index of either of the first MCS table, the second MCS table, or the third MCS table.

In NR, the selection of the CQI table and the selection of the MCS table can be performed independently. The controller 104 of the base station apparatus determines the MCS index by using the MCS table used in the PDSCH by using the MCS table configured through the RRC. The MCS index is input to a downlink control signal generation unit 1064, and is notified to the terminal apparatus as DCI. In a case that there is no configuration of the MCS table through the RRC, the MCS index is determined by using the first MCS table, which is an MCS table supporting up to 64QAM. In other words, for the PDSCH scheduled by the PDCCH including the DCI format with the CRC scrambled by the C-RNTI (or the CS-RNTI), in a case that the higher layer parameter (RRC parameter) configures the second MCS table, the terminal apparatus uses the MCS index notified from the base station apparatus and the second MCS table in order to determine the modulation order (modulation scheme) and the target coding rate used in the PDSCH.

A case that the terminal apparatus simultaneously configures both communications of the URLLC and the eMBB will be discussed. In a case that the 64QAM MCS table is configured through the RRC signaling, it is necessary to change to the URLLC MCS table by the RRC signaling in order to perform data transmission of the URLLC, so the data transmission takes time. In a case that the URLLC MCS table is configured by the RRC parameter, it is necessary to change the URLLC MCS table to the 64QAM MCS table through the RRC signaling in order to perform data transmission using the 64QAM MCS table, so the data transmission takes time.

To dynamically change the configuration of the MCS table, changes are made to the DCI format in the present embodiment. In the DCI format, there are DCI format 0_0 and DCI format 0_1, which is a DCI format for scheduling of the PUSCH, DCI format 1_0, which is a DCI format for scheduling of the PDSCH, DCI format 1_1 for uplink transmission, and the like. For example, in DCI format 0_0, information such as an identifier for the DCI format, a resource allocation in a frequency domain, and a resource allocation in a time domain is transmitted from the base station apparatus by using the DCI format. In order to change the MCS table dynamically, an indicator (MCS table indicator) is added to specify the MCS table in addition to the above-described information. For example, in a case that the MCS table indicator is 0, an MCS table is selected based on the configuration by the RRC signaling, and in the case that the MCS table indicator is 1, the URLLC MCS table is selected regardless of the configuration by the RRC signaling. In other words, the 64QAM MCS table is used in a case that the RRC parameter for the MCS table is configured to a prescribed value (e.g., '64QAM') and the PDSCH is scheduled using the C-RNTI. The URLLC MCS table is used in a case that the RRC parameter for the MCS table is configured to a prescribed value (e.g., 'URLLC') and the PDSCH is scheduled using the C-RNTI or CS-RNTI, or in a case that the MCS table indicator is configured to 1. In other cases, in the PDSCH scheduled using the C-RNTI or CS-RNTI, the 256QAM MCS table is used, and for the RNTI other than the C-RNTI and the CS-RNTI or DCI format 1_0, the 64QAM MCS table is used. Note that the embodiment is not limited thereto, and the table may be configured using the RRC parameter for each MCS table indicator value. In DCI format 0_0 and DCI format 0_1, an indicator for the MCS table may be included only in DCI format 0_1. Furthermore, in DCI format 1_0 and DCI format 1_1, the MCS table indicator for the MCS table may be included only in the DCI format 1_1. Note that the number of bits in the field of the MCS table indicator may include multiple bits rather than one bit. In a case of 2 bits, for example, 00 may indicate the 64QAM MCS table, 01 may indicate the 256QAM MCS table, and 10 may indicate the URLLC MCS table. 11 may be a configuration to follow the RRC parameter configuration.

The PUSCH is a physical channel used to transmit uplink data (an Uplink Transport Block, an Uplink-Shared Channel (UL-SCH)), and CP-OFDM or DFT-S-OFDM is applied as a transmission scheme. The PUSCH may be used to transmit the HARQ-ACK in response to the downlink data and/or the channel state information along with the uplink data. The PUSCH may be used to transmit only the channel state information. The PUSCH may be used to transmit only the HARQ-ACK and the channel state information.

The PUSCH is used to transmit radio resource control (Radio Resource Control (RRC)) signaling. The RRC signaling is also referred to as an RRC message/RRC layer information/an RRC layer signal/an RRC layer parameter/an RRC information element. The RRC signaling is information/signal processed in a radio resource control layer. The RRC signaling transmitted from the base station apparatus may be signaling common to multiple terminal apparatuses in a cell. The RRC signaling transmitted from the base station apparatus may be signaling dedicated to a certain terminal apparatus (also referred to as dedicated signaling). In other words, user equipment specific (user equipment unique) information is transmitted using the signaling dedicated to the certain terminal apparatus. The RRC message can include a UE Capability of the terminal apparatus. The UE Capability is information indicating a function supported by the terminal apparatus.

The PUSCH is used to transmit a Medium Access Control Element (MAC CE). The MAC CE is information/signal processed (transmitted) in a Medium Access Control layer. For example, a power headroom may be included in the MAC CE and may be reported via the physical uplink shared channel. In other words, a MAC CE field is used to indicate a level of the power headroom. The uplink data can include the RRC message and the MAC CE. The RRC signaling and/or the MAC CE is also referred to as a higher layer signal (higher layer signaling). The RRC signaling and/or the MAC CE are included in a transport block.

The PRACH is used to transmit a preamble used for random access. The PRACH is used to transmit a random access preamble. The PRACH is used for indicating the initial connection establishment procedure, the handover procedure, the connection re-establishment procedure, synchronization (timing adjustment) for uplink transmission, and the request for the PUSCH (UL-SCH) resource.

In the uplink radio communication, an Uplink Reference Signal (UL RS) is used as an uplink physical signal. The uplink physical signal is not used for transmission of information output from higher layers, but is used by the physical layer. The uplink reference signal includes a Demodulation Reference Signal (DMRS) and a Sounding Reference Signal (SRS). The DMRS is associated with transmission of the physical uplink-shared channel/physical uplink control channel. For example, the base station apparatus 10 uses the demodulation reference signal to perform channel estimation/channel compensation in a case of demodulating the physical uplink-shared channel/the physical uplink control channel.

The SRS is not associated with the transmission of the physical uplink shared channel/the physical uplink control channel. The base station apparatus 10 uses the SRS to measure an uplink channel state (CSI Measurement).

In FIG. 1, at least the following downlink physical channels are used in radio communication of the downlink r31. The downlink physical channels are used for transmitting information output from the higher layer.
- Physical Broadcast Channel (PBCH)
- Physical Downlink Control Channel (PDCCH)
- Physical Downlink Shared Channel (PDSCH)

The PBCH is used for broadcasting a Master Information Block (MIB, a Broadcast Channel (BCH)) that is used commonly by the terminal apparatuses. The MIB is one of pieces of system information. For example, the MIB includes a downlink transmission bandwidth configuration and a System Frame number (SFN). The MIB may include information indicating at least some of numbers of a slot, a subframe, and a radio frame in which a PBCH is transmitted.

The PDCCH is used to transmit Downlink Control Information (DCI). For the downlink control information, multiple formats based on applications (also referred to as DCI formats) are defined. The DCI format may be defined based on the type and the number of bits of the DCI constituting a single DCI format. Each format is used depending on the application. The downlink control information includes control information for downlink data transmission and control information for uplink data transmission. The DCI format for the downlink data transmission is also referred to as a downlink assignment (or downlink grant). The DCI format for the uplink data transmission is also referred to as an uplink grant (or uplink assignment).

A single downlink assignment is used for scheduling a single PDSCH in a single serving cell. The downlink grant may be used for at least scheduling of the PDSCH within the same slot as the slot in which the downlink grant has been transmitted. The downlink assignment includes downlink control information, such as a resource block allocation for the PDSCH, a Modulation and Coding Scheme (MCS) for the PDSCH, a NEW Data Indicator (NDI) for indicating initial transmission or retransmission, information for indicating the HARQ process number in the downlink, and a Redundancy version for indicating an amount of redundancy added to the codeword during error correction coding. The codeword is data after the error correction coding. The downlink assignment may include a Transmission Power Control (TPC) command for the PUCCH and a TPC command for the PUSCH. The uplink grant may include a Repetition number for indicating the number of repetitions for transmission of the PUSCH. Note that the DCI format for each downlink data transmission includes information (fields) required for the application among the above-described information.

A single uplink grant is used for notifying the terminal apparatus of scheduling of a single PUSCH in a single serving cell. The uplink grant includes uplink control information, such as information on the resource block allocation for transmission of the PUSCH (resource block allocation and hopping resource allocation), information on the MCS for the PUSCH (MCS/Redundancy version), information on the DMRS ports, information on retransmission of the PUSCH, a TPC command for the PUSCH, and a request for downlink Channel State Information (CSI)(CSI request). The uplink grant may include information for indicating the HARQ process number in the uplink, a Transmission Power Control (TPC) command for the PUCCH, and a TPC command for the PUSCH. Note that the DCI format for each uplink data transmission includes information (fields) required for the application among the above-described information.

The PDCCH is generated by adding a Cyclic Redundancy Check (CRC) to the downlink control information. In the PDCCH, CRC parity bits are scrambled with a prescribed identifier (also referred to as an exclusive OR operation, mask). The parity bits are scrambled with a Cell-Radio Network Temporary Identifier (C-RNTI), a Semi Persistent Scheduling (SPS) C-RNTI (Configured Scheduling (CS)-RNTI), a Temporary C-RNTI, a Paging (P)-RNTI, a System Information (SI)-RNTI, or a Random Access (RA)-RNTI. The C-RNTI and the CS-RNTI are identifiers for identifying a terminal apparatus in a cell. The Temporary C-RNTI is an identifier for identifying the terminal apparatus that has transmitted a random access preamble in a contention based random access procedure. The C-RNTI and the Temporary C-RNTI are used to control PDSCH transmission or PUSCH transmission in a single subframe. The CS-RNTI is used to periodically allocate a resource for the PDSCH or the PUSCH. The P-RNTI is used to transmit a paging message (Paging Channel (PCH)). The SI-RNTI is used to transmit the SIB, and the RA-RNTI is used to transmit a random access response (a message 2 in a random access procedure).

The PDSCH is used to transmit the downlink data (the downlink transport block, DL-SCH). The PDSCH is used to transmit a system information message (also referred to as a System Information Block (SIB)). Some or all of the SIBs can be included in the RRC message.

The PDSCH is used to transmit the RRC signaling. The RRC signaling transmitted from the base station apparatus may be common to the multiple terminal apparatuses in the cell (unique to the cell). That is, the information common to the user equipments in the cell is transmitted using the RRC signaling unique to the cell. The RRC signaling transmitted from the base station apparatus may be a message dedicated to a certain terminal apparatus (also referred to as dedicated signaling). In other words, user equipment specific (user equipment unique) information is transmitted by using the message dedicated to the certain terminal apparatus.

The PDSCH is used to transmit the MAC CE. The RRC signaling and/or the MAC CE is also referred to as a higher layer signal (higher layer signaling). The PMCH is used to transmit multicast data (Multicast Channel (MCH)).

In the downlink radio communication in FIG. 1, a Synchronization signal (SS) and a Downlink Reference Signal (DL RS) are used as downlink physical signals. The downlink physical signals are not used for transmission of information output from the higher layers, but are used by the physical layer.

The synchronization signal is used for the terminal apparatus to take synchronization in the frequency domain and the time domain in the downlink. The downlink reference signal is used for the terminal apparatus to perform the channel estimation/channel compensation on the downlink physical channel. For example, the downlink reference signal is used to demodulate the PBCH, the PDSCH, and the PDCCH. The downlink reference signal can be used for the terminal apparatus to measure the downlink channel state (CSI measurement).

The downlink physical channel and the downlink physical signal are also collectively referred to as a downlink signal. The uplink physical channel and the uplink physical signal are also collectively referred to as an uplink signal. The downlink physical channel and the uplink physical channel are also collectively referred to as a physical channel. The downlink physical signal and the uplink physical signal are also collectively referred to as a physical signal.

The BCH, the UL-SCH, and the DL-SCH are transport channels. Channels used in the Medium Access Control (MAC) layer are referred to as transport channels. A unit of the transport channel used in the MAC layer is also referred to as a Transport Block (TB) or a MAC Protocol Data Unit (PDU). The transport block is a unit of data that the MAC layer delivers to the physical layer. In the physical layer, the transport block is mapped to a codeword, and coding processing and the like are performed for each codeword.

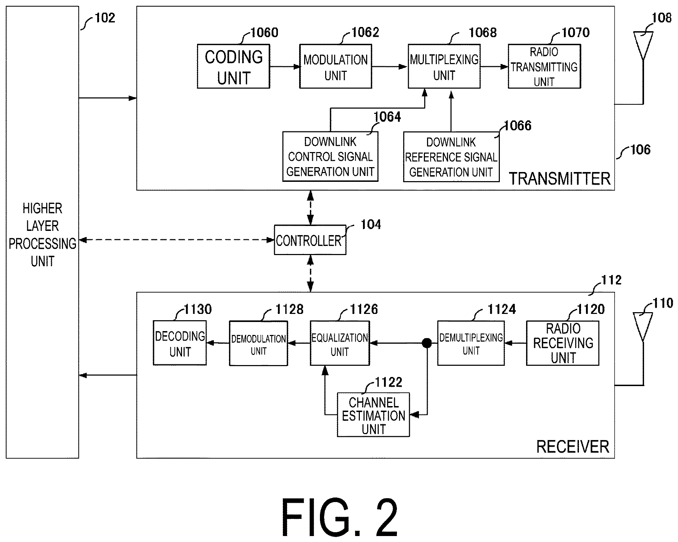

FIG. 2 is a schematic block diagram of a configuration of the base station apparatus 10 according to the present embodiment. The base station apparatus 10 includes a higher layer processing unit (higher layer processing step) 102, a controller (control step) 104, a transmitter (transmitting step) 106, a transmit antenna 108, a receive antenna 110, and a receiver (receiving step) 112. The transmitter 106 generates the physical downlink channel in accordance with a logical channel input from the higher layer processing unit 102. The transmitter 106 includes a coding unit (coding step) 1060, a modulation unit (modulating step) 1062, a downlink control signal generation unit (downlink control signal generating step) 1064, a downlink reference signal generation unit (downlink reference signal generating step) 1066, a multiplexing unit (multiplexing step) 1068, and a radio transmitting unit (radio transmitting step) 1070. The receiver 112 detects (demodulates, decodes, or the like) the physical uplink channel and inputs the content to the higher layer processing unit 102. The receiver 112 includes a radio receiving unit (radio receiving step) 1120, a channel estimation unit (channel estimating step) 1122, a demultiplexing unit (demultiplexing step) 1124, an equalization unit (equalizing step) 1126, a demodulation unit (demodulating step) 1128, and a decoding unit (decoding step) 1130.

The higher layer processing unit 102 performs processing on a layer, such as a Medium Access Control (MAC) layer, a Packet Data Convergence Protocol (PDCP) layer, a Radio Link Control (RLC) layer, and a Radio Resource Control (RRC) layer, that is higher than the physical layer. The higher layer processing unit 102 generates information required to control the transmitter 106 and the receiver 112, and outputs the resultant information to the controller 104. The higher layer processing unit 102 outputs the downlink data (such as DL-SCH), the system information (MIB, SIB), and the like to the transmitter 106. Note that the DMRS configuration information may be notified to the terminal apparatus by using the system information (MIB or SIB), instead of the notification by using the higher layer such as RRC.

The higher layer processing unit 102 generates, or acquires from a higher node, the system information (a part of the MIB or the SIB) to be broadcasted. The higher layer processing unit 102 outputs the system information to be broadcasted to the transmitter 106 as BCH/DL-SCH. The MIB is allocated to the PBCH in the transmitter 106. The SIB is allocated to the PDSCH in the transmitter 106. The higher layer processing unit 102 generates, or acquires from a higher node, the system information (SIB) specific to the terminal apparatus. The SIB is allocated to the PDSCH in the transmitter 106.

The higher layer processing unit 102 configures various RNTIs for each terminal apparatus. The RNTI is used for encryption (scrambling) of the PDCCH, the PDSCH, and the like. The higher layer processing unit 102 outputs the RNTI to the controller 104/the transmitter 106/the receiver 112.

In a case that the downlink data (transport block, DL-SCH) allocated to the PDSCH, the system information specific to the terminal apparatus (System Information Block: SIB), the RRC message, the MAC CE, and the DMRS configuration information are not notified by using the system information, such as the SIB and the MIB, and the DCI, the higher layer processing unit 102 generates, or acquires from a higher node, the DMRS configuration information or the like and outputs the information generated or acquired to the transmitter 106. The higher layer processing unit 102 manages various kinds of configuration information of the terminal apparatus 20. Note that a part of the function of the radio resource control may be performed in the MAC layer or the physical layer.

The higher layer processing unit 102 receives information on the terminal apparatus, such as the function supported by the terminal apparatus (UE capability), from the terminal apparatus 20 (via the receiver 112). The terminal apparatus 20 transmits its own function to the base station apparatus 10 by a higher layer signaling (RRC signaling). The information on the terminal apparatus includes information for indicating whether the terminal apparatus supports a prescribed function or information for indicating that the terminal apparatus has completed introduction and testing of the prescribed function. The information for indicating whether the prescribed function is supported includes information for indicating whether the introduction and testing of the prescribed function have been completed.

In a case that the terminal apparatus supports the prescribed function, the terminal apparatus transmits information (parameters) for indicating whether the prescribed function is supported. In a case that the terminal apparatus does not support the prescribed function, the terminal apparatus may be configured not to transmit information (parameters) for indicating whether the prescribed function is supported. In other words, whether the prescribed function is supported is notified by whether information (parameters) for indicating whether the prescribed function is supported is transmitted. The information (parameters) for indicating whether the prescribed function is supported may be notified by using one bit of 1 or 0.

The higher layer processing unit 102 acquires the DL-SCH from the decoded uplink data (including the CRC) from the receiver 112. The higher layer processing unit 102 performs error detection on the uplink data transmitted by the terminal apparatus. For example, the error detection is performed in the MAC layer.

The controller 104 controls the transmitter 106 and the receiver 112 based on the various kinds of configuration information input from the higher layer processing unit 102/receiver 112. The controller 104 generates the downlink control information (DCI) based on the configuration information input from the higher layer processing unit 102/receiver 112, and outputs the generated downlink control information to the transmitter 106. For example, the controller 104 configures, based on the configuration information on the DMRS input from the higher layer processing unit 102/receiver 112 (whether the configuration is the DMRS configuration 1 or the DMRS configuration 2), the frequency allocation of the DMRS (an even subcarrier or an odd subcarrier in the case of DMRS configuration 1, and any of the zeroth to the second sets in the case of the DMRS configuration 2), and generates the DCI.

The controller 104 determines the MCS of the PUSCH in consideration of channel quality information (CSI Measurement result) measured by the channel estimation unit 1122. The controller 104 determines an MCS index corresponding to the MCS of the PUSCH. The controller 104 includes, in the uplink grant, the MCS index determined.

The transmitter 106 generates the PBCH, the PDCCH, the PDSCH, the downlink reference signal, and the like in accordance with the signal input from the higher layer processing unit 102/controller 104. The coding unit 1060 performs encoding (including repetition) using block code, convolutional code, turbo code, polar coding, LDPC code, or the like on the BCH, the DL-SCH, and the like input from the higher layer processing unit 102 by using a predetermined coding scheme/a coding scheme determined by the higher layer processing unit 102. The coding unit 1060 performs puncturing on the coded bits based on the coding rate input from the controller 104. The modulation unit 1062 performs data modulation on the coded bits input from the coding unit 1060 by using a predetermined modulation scheme (modulation order)/a modulation scheme (modulation order) input from the controller 104, such as the BPSK, QPSK, 16QAM, 64QAM, or 256QAM. The modulation order is based on the MCS index selected by the controller 104.

The downlink control signal generation unit 1064 adds the CRC to the DCI input from the controller 104. The downlink control signal generation unit 1064 encrypts (scrambles) the CRC by using the RNTI. Furthermore, the downlink control signal generation unit 1064 performs QPSK modulation on the DCI to which the CRC is added, and generates the PDCCH. The downlink reference signal generation unit 1066 generates a sequence known to the terminal apparatus as a downlink reference signal. The known sequence is determined by a predetermined rule based on a physical cell identity for identifying the base station apparatus 10 and the like.

The multiplexing unit 1068 multiplexes the PDCCHs/downlink reference signals/modulation symbols of the respective channels input from the modulation unit 1062. In other words, the multiplexing unit 1068 maps the PDCCHs/downlink reference signals/modulation symbols of the respective channels to the resource elements. The resource elements to which the mapping is performed are controlled by downlink scheduling input from the controller 104. The resource element is the minimum unit of a physical resource including one OFDM symbol and one subcarrier. Note that, in a case of performing MIMO transmission, the transmitter 106 includes the coding units 1060 and the modulation units 1062. Each of the number of the coding units 1060 and the number of the modulation units 1062 is equal to the number of layers. In this case, the higher layer processing unit 102 configures the MCS for each transport block in each layer.

The radio transmitting unit 1070 performs Inverse Fast Fourier Transform (IFFT) on the multiplexed modulation symbols and the like to generate OFDM symbols. The radio transmitting unit 1070 adds cyclic prefixes (CPs) to the OFDM symbols to generate a baseband digital signal. Furthermore, the radio transmitting unit 1070 converts the digital signal into an analog signal, removes unnecessary frequency components from the analog signal by filtering, performs up-conversion to a signal of a carrier frequency, performs power amplification, and outputs the resultant signal to the transmit antenna 108 for transmission.

In accordance with an indication from the controller 104, the receiver 112 detects (separates, demodulates, and decodes) the reception signal received from the terminal apparatus 20 through the receive antenna 110, and inputs the decoded data to the higher layer processing unit 102/controller 104. The radio receiving unit 1120 converts the uplink signal received through the receive antenna 110 into a baseband signal by down-conversion, removes unnecessary frequency components from the baseband signal, controls an amplification level such that a signal level is suitably maintained, performs orthogonal demodulation based on an in-phase component and an orthogonal component of the received signal, and converts the resulting orthogonally-demodulated analog signal into a digital signal. The radio receiving unit 1120 removes a part corresponding to the CP from the converted digital signal. The radio receiving unit 1120 performs Fast Fourier Transform (FFT) on the signal from which the CPs have been removed, and extracts a signal in the frequency domain. The signal in the frequency domain is output to the demultiplexing unit 1124.

The demultiplexing unit 1124 demultiplexes the signals input from the radio receiving unit 1120 into signals, such as the PUSCH, the PUCCH, and the uplink reference signal, based on uplink scheduling information (such as uplink data channel allocation information) input from the controller 104. The uplink reference signal resulting from the demultiplexing is input to the channel estimation unit 1122. The PUSCH and PUCCH resulting from the demultiplexing are output to the equalization unit 1126.

The channel estimation unit 1122 uses the uplink reference signal to estimate a frequency response (or a delay profile). The result of frequency response in the channel estimation for demodulation is input to the equalization unit 1126. The channel estimation unit 1122 measures the uplink channel condition (measures a Reference Signal Received Power (RSRP), a Reference Signal Received Quality (RSRQ), and a Received Signal Strength Indicator (RSSI)) by using the uplink reference signal. The measurement of the uplink channel state is used to determine the MCS for the PUSCH and the like.

The equalization unit 1126 performs processing to compensate for an influence in a channel based on the frequency response input from the channel estimation unit 1122. As a method for the compensation, any existing channel compensation, such as a method of multiplying an MMSE weight or an MRC weight and a method of applying an MLD, is applicable. The demodulation unit 1128 performs demodulation processing based on the information on a predetermined modulation scheme/modulation scheme indicated by the controller 104.

The decoding unit 1130 performs decoding processing on the output signal from the demodulation unit based on the information on a predetermined coding rate/coding rate indicated by the controller 104. The decoding unit 1130 inputs the decoded data (such as the UL-SCH) to the higher layer processing unit 102.

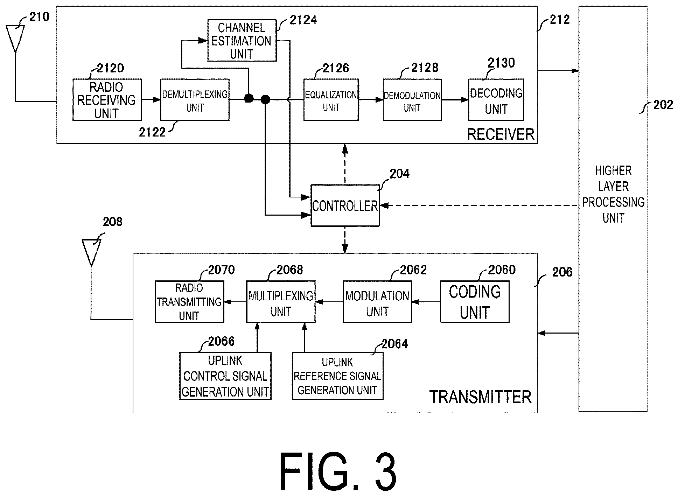

FIG. 3 is a schematic block diagram illustrating a configuration of the terminal apparatus 20 according to the present embodiment. The terminal apparatus 20 includes a higher layer processing unit (higher layer processing step) 202, a controller (control step) 204, a transmitter (transmitting step) 206, a transmit antenna 208, a receive antenna 210, and a receiver (receiving step) 212.

The higher layer processing unit 202 performs processing of the medium access control (MAC) layer, the packet data convergence protocol (PDCP) layer, the radio link control (RLC) layer, and the radio resource control (RRC) layer. The higher layer processing unit 202 manages various kinds of configuration information of the terminal apparatus itself. The higher layer processing unit 202 notifies the base station apparatus 10 of information for indicating terminal apparatus functions supported by the terminal apparatus itself (UE Capability) via the transmitter 206. The higher layer processing unit 202 notifies the UE Capability by RRC signaling.

The higher layer processing unit 202 acquires the decoded data, such as the DL-SCH and the BCH, from the receiver 212. The higher layer processing unit 202 generates the HARQ-ACK from a result of the error detection of the DL-SCH. The higher layer processing unit 202 generates the SR. The higher layer processing unit 202 generates the UCI including the HARQ-ACK/SR/CSI (including the CQI report). In a case that the DMRS configuration information is notified by the higher layer, the higher layer processing unit 202 inputs the information on the DMRS configuration to the controller 204. The higher layer processing unit 202 inputs the UCI and the UL-SCH to the transmitter 206. Note that some functions of the higher layer processing unit 202 may be included in the controller 204.

The controller 204 interprets the downlink control information (DCI) received via the receiver 212. The controller 204 controls the transmitter 206 in accordance with PUSCH scheduling/MCS index/Transmission Power Control (TPC), and the like acquired from the DCI for uplink transmission. The controller 204 controls the receiver 212 in accordance with the PDSCH scheduling/the MCS index and the like acquired from the DCI for downlink transmission. Furthermore, the controller 204 identifies the frequency allocation of the DMRS according to the information on the frequency allocation of the DMRS included in the DCI for downlink transmission and the DMRS configuration information input from the higher layer processing unit 202.

The transmitter 206 includes a coding unit (coding step) 2060, a modulation unit (modulating step) 2062, an uplink reference signal generation unit (uplink reference signal generating step) 2064, an uplink control signal generation unit (uplink control signal generating step) 2066, a multiplexing unit (multiplexing step) 2068, and a radio transmitting unit (radio transmitting step) 2070.

In accordance with the control by the controller 204 (in accordance with the coding rate calculated based on the MCS index), the coding unit 2060 codes the uplink data (UL-SCH) input from the higher layer processing unit 202 by convolutional coding, block coding, turbo coding, or the like.

The modulation unit 2062 modulates the coded bits input from the coding unit 2060 (generates modulation symbols for the PUSCH) by a modulation scheme indicated from the controller 204/modulation scheme predetermined for each channel, such as BPSK, QPSK, 16QAM, 64QAM, and 256QAM.

The uplink reference signal generation unit 2064 generates a sequence determined from a predetermined rule (formula), based on a physical cell identity (PCI), which is also referred to as a Cell ID, or the like, for identifying the base station apparatus 10, a bandwidth in which the uplink reference signals are mapped, a cyclic shift, parameter values to generate the DMRS sequence, further the frequency allocation, and the like, in accordance with an indication by the controller 204.

In accordance with the indication from the controller 204, the uplink control signal generation unit 2066 encodes the UCI, performs the BPSK/QPSK modulation, and generates modulation symbols for the PUCCH.

In accordance with the uplink scheduling information from the controller 204 (transmission interval in the SPS for the uplink included in the RRC message, resource allocation included in the DCI, and the like), the multiplexing unit 2068 multiplexes the modulation symbols for the PUSCH, the modulation symbols for the PUCCH, and the uplink reference signals for each transmit antenna port (DMRS port) (in other words, the respective signals are mapped to the resource elements).

The radio transmitting unit 2070 performs Inverse Fast Fourier Transform (IFFT) on the multiplexed signals to generate OFDM symbols. The radio transmitting unit 2070 adds CPs to the OFDM symbols to generate a baseband digital signal. Furthermore, the radio transmitting unit 2070 converts the baseband digital signal into an analog signal, removes unnecessary frequency components from the analog signal, converts the signal into a signal of a carrier frequency by up-conversion, performs power amplification, and transmits the resultant signal to the base station apparatus 10 via the transmit antenna 208.

The receiver 212 is configured to includes a radio receiving unit (radio receiving step) 2120, a demultiplexing unit (demultiplexing step) 2122, a channel estimation unit (channel estimating step) 2144, an equalization unit (equalizing step) 2126, a demodulation unit (demodulating step) 2128, and a decoding unit (decoding step) 2130.

The radio receiving unit 2120 converts the downlink signal received through the receive antenna 210 into a baseband signal by down-conversion, removes unnecessary frequency components from the baseband signal, controls an amplification level such that a signal level is suitably maintained, performs orthogonal demodulation based on an in-phase component and an orthogonal component of the received signal, and converts the resulting orthogonally-demodulated analog signal into a digital signal. The radio receiving unit 2120 removes a part corresponding to the CP from the digital signal resulting from the conversion, performs the FFT on the signal from which the CP has been removed, and extracts a signal in the frequency domain.

The demultiplexing unit 2122 separates the extracted signal in the frequency domain into the downlink reference signal, the PDCCH, the PDSCH, and the PBCH. A channel estimation unit 2124 uses the downlink reference signal (such as the DM-RS) to estimate a frequency response (or delay profile). The result of frequency response in the channel estimation for demodulation is input to the equalization unit 1126. The channel estimation unit 2124 measures the uplink channel state (measures a Reference Signal Received Power (RSRP), a Reference Signal Received Quality (RSRQ), a Received Signal Strength Indicator (RSSI), and a Signal to Interference plus Noise power Ratio (SINR)) by using the downlink reference signal (such as the CSI-RS). The measurement of the downlink channel state is used to determine the MCS for the PUSCH and the like. The measurement result of the downlink channel state is used to determine the CQI index and the like.

The equalization unit 2126 generates an equalization weight based on an MMSE criterion, from the frequency response input from the channel estimation unit 2124. The equalization unit 2126 multiplies the input signal (the PUCCH, the PDSCH, the PBCH, and the like) from the demultiplexing unit 2122 by the equalization weight. The demodulation unit 2128 performs demodulation processing based on information of the predetermined modulation order/the modulation order indicated by the controller 204.

The decoding unit 2130 performs decoding processing on the output signal from the demodulation unit 2128 based on information of the predetermined coding rate/the coding rate indicated by the controller 204. The decoding unit 2130 inputs the decoded data (such as the DL-SCH) to the higher layer processing unit 202.

### Second Embodiment

In the first embodiment, dynamically changing an MCS table by adding an indicator for the MCS table in the DCI format has been described. In the present embodiment, a method of dynamically changing the MCS table by changing the scheme for the RNTI will be described.

A CRC scrambled with an identifier such as a C-RNTI is added to the DCI format. In a case that data transmission for URLLC is performed, the controller of the base station apparatus scrambles the CRC with a URLLC-RNTI (an RNTI for URLLC of which designation may be a URLLC C-RNTI or the like, but not either a C-RNTI or a CS-RNTI), generates a DCI format, and transmits it to the terminal apparatus. In a case that the MCS index in the MCS table for the URLLC is determined to modulate the PDSCH, the controller of the base station apparatus performs scrambling with a URLLC-RNTI, and in a case that the MCS index in the MCS table (64QAM MCS table, or 256QAM MCS table) based on the RRC parameter is determined to modulate the PDSCH, the controller of the base station apparatus performs scrambling with a C-RNTI (or CS-RNTI). In this way, the base station apparatus can dynamically select the MCS table and perform data transmission of the PDSCH. Note that the case of PDSCH has been described above, but the same applies to DCI format 0_0 or DCI format 0_1, each of which is a DCI format for PUSCH transmission.

Next, operations of the terminal apparatus will be described. In a case that the CRC is descrambled with the URLLC-RNTI, the controller of the terminal apparatus determines that the MCS index included in the DCI format is based on the MCS table for the URLLC, and demodulates the PDSCH. On the other hand, in a case that the CRC is descrambled with the C-RNTI (or the CS-RNTI), the controller of the terminal apparatus determines that the MCS index included in the DCI format is based on the configuration of the RRC parameter, and demodulates the PDSCH by using the MCS table (64QAM MCS table or 256QAM MCS table) configured using the RRC parameter. In this way, the terminal apparatus can dynamically select the MCS table and perform data transmission of the PDSCH. Note that the RRC parameter may be configured for an MCS table of MCS tables including not only the 64QAM MCS table and the 256QAM MCS table but also the URLLC MCS table. The case of PDSCH has been described above, but the same applies to DCI format 0_0 or DCI format 0_1, which is a DCI format for PUSCH transmission. In other words, the controller of the terminal apparatus uses the URLLC MCS table in a case that the RRC parameter for the MCS table is configured to a prescribed value (e.g., 'URLLC'), and the PDSCH is scheduled using the C-RNTI or the CS-RNTI, or in a case that the PDSCH is scheduled using the RNTI for the URLLC.

### Third Embodiment

In the first and second embodiments, a method for dynamically changing the MCS table by changing a signal of a physical layer such as a DCI format or a RNTI has been described. In the present embodiment, a method of dynamically changing the MCS table by changing the higher layer signaling will be described.

In NR, a scheme of Bandwidth Part (BWP) is introduced, which allows only a portion of the system band (component carrier) of the base station apparatus to be considered as the system band of the terminal apparatus. The base station apparatus can dynamically change, by DCI, the BWP to be used among multiple BWPs. The BWPs may be in an exclusive relationship, partially overlapping, or in an inclusive relationship with each other.

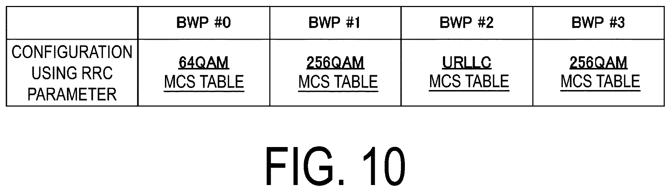

In the present embodiment, the URLLC MCS table can also be configured as an RRC parameter in addition to the 64QAM MCS table and the 256QAM MCS table as the RRC parameter for the MCS table. As an example, a case of configuration using an RRC parameter as illustrated in FIG. 10 is assumed as the configuration of the MCS table. For example, in a case that the PDSCH using the BWP #0 is used in the immediately preceding DCI, the controller in the base station apparatus configures the field of the BWP indicator in the DCI format so as to use the BWP #2 in a case of performing transmission using the MCS table for the URLLC in the subsequent transmission. This allows the MCS table to be dynamically selected without changing the specifications of the current NR physical layer. In the drawings, the number of BWPs is four, but the number of BWPs is not limited thereto, and other values may be used, such as two or eight. Although the description has been given above using BWPs, the present invention may be applied to Supplimental Uplink (SUL). In other words, the MCS table may be configured through the RRC for the SUL as well. Furthermore, in a case that the 64QAM CQI table and the 256QAM CQI table are configured as the CQI table, the MCS table is selected based on the configuration of the RRC parameter, and in a case that the URLLC CQI table is configured using the RRC parameter, the URLLC MCS table may be selected regardless of the RRC parameter for the MCS table. At this time, the conditions described in other embodiments may be imposed, such as limiting the DCI format to 0_1 or 1 1.

In order to dynamically change the MCS table without changing the specifications of the current NR physical layer, the RRC parameter for the MCS table needs to be configurable for each BWP, and further the RRC parameter needs to be configurable for the URLLC MCS table in addition to the 64QAM MCS table and the 256QAM MCS table. By allowing such an RRC parameter configuration, the MCS table can be dynamically selected without changing the physical layer signaling.

A program running on an apparatus according to the present invention may serve as a program that controls a Central Processing Unit (CPU) and the like to cause a computer to operate in such a manner as to realize the functions of the above-described embodiment according to the present invention. Programs or the information handled by the programs are temporarily read into a volatile memory, such as a Random Access Memory (RAM) while being processed, or stored in a non-volatile memory, such as a flash memory, or a Hard Disk Drive (HDD), and then read by the CPU to be modified or rewritten, as necessary.

Note that the apparatuses in the above-described embodiments may be partially enabled by a computer. In that case, a program for realizing the functions of the embodiments may be recorded on a computer readable recording medium. This configuration may be realized by causing a computer system to read the program recorded on the recording medium for execution. It is assumed that the "computer system" refers to a computer system built into the apparatuses, and the computer system includes an operating system and hardware components such as a peripheral device. The "computer-readable recording medium" may be any of a semiconductor recording medium, an optical recording medium, a magnetic recording medium, and the like.

Moreover, the "computer-readable recording medium" may include a medium that dynamically retains a program for a short period of time, such as a communication line that is used for transmission of the program over a network such as the Internet or over a communication line such as a telephone line, and may also include a medium that retains a program for a fixed period of time, such as a volatile memory within the computer system for functioning as a server or a client in such a case. The above-described program may be one for realizing some of the above-described functions, and also may be one capable of realizing the above-described functions in combination with a program already recorded in a computer system.

Each functional block or various characteristics of the apparatuses used in the above-described embodiments may be implemented or performed on an electric circuit, that is, typically an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor or may be a processor of known type, a controller, a micro-controller, or a state machine instead. The above-mentioned electric circuit may include a digital circuit, or may include an analog circuit. In a case that with advances in semiconductor technology, a circuit integration technology appears that replaces the present integrated circuits, it is also possible to use an integrated circuit based on the technology.

Note that the invention of the present patent application is not limited to the above-described embodiments. In the embodiment, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Various modifications are possible within the scope of the present invention defined by claims, and embodiments that are made by suitably combining technical means disclosed according to the different embodiments are also included in the technical scope of the present invention. A configuration in which constituent elements, described in the respective embodiments and having mutually the same effects, are substituted for one another is also included in the technical scope of the present invention.

### Industrial Applicability

The present invention can be preferably used in a base station apparatus, a terminal apparatus, and a communication method.

## Claims

1. A terminal apparatus for communicating with a base station apparatus, the terminal apparatus comprising:
a controller configured to use an MCS table among a first MCS table, a second MCS table, and a third MCS table, and an MCS index, to determine a modulation order and a target coding rate to be used in a PDSCH, wherein
the third MCS table is used in a case that at least a higher parameter for an MCS table is configured to a prescribed value, and a PDSCH is scheduled by a PDCCH with a CRC scrambled by a first RNTI, or a PDSCH is scheduled by a PDCCH with a CRC scrambled by a second RNTI.

2. The terminal apparatus according to claim 1, wherein
the third MCS table is used in a case that a PDCCH with a CRC scrambled by the C-RNTI is DCI format 1_1.

3. A terminal apparatus for communicating with a base station apparatus, the terminal apparatus comprising:
a controller configured to use an MCS table among a first MCS table, a second MCS table, and a third MCS table, and an MCS index, to determine a modulation order and a target coding rate to be used in a PUSCH, wherein
the third MCS table is used in a case that at least a higher parameter for an MCS table is configured to a prescribed value, and a PUSCH is scheduled by a PDCCH with a CRC scrambled by a first RNTI, or a PUSCH is scheduled by a PDCCH with a CRC scrambled by a second RNTI.

4. A base station apparatus for communicating with a terminal apparatus, the base station apparatus comprising:
a controller configured to use an MCS table among a first MCS table, a second MCS table, and a third MCS table, and an MCS index, to determine a modulation order and a target coding rate to be used in a PDSCH, wherein
the controller uses the third MCS table in a case that at least a higher parameter for an MCS table is configured to a prescribed value, and a PDSCH is scheduled by a PDCCH with a CRC scrambled by a first RNTI, or a PDSCH is scheduled by a PDCCH with a CRC scrambled by a second RNTI.

5. The base station apparatus according to claim 4, wherein
the third MCS table is used in a case that a higher parameter for an MCS table is configured to a prescribed value and is scheduled by DCI format 1_1.

6. A base station apparatus for communicating with a terminal apparatus, the base station apparatus comprising:
a controller configured to use an MCS table among a first MCS table, a second MCS table, and a third MCS table, and an MCS index, to determine a modulation order and a target coding rate to be used in a PUSCH, wherein
the controller uses the third MCS table in a case that at least a higher parameter for an MCS table is configured to a prescribed value, and a PUSCH is scheduled by a PDCCH with a CRC scrambled by a first RNTI, or a PUSCH is scheduled by a PDCCH with a CRC scrambled by a second RNTI.
